# FASCICULE DE BREVET EUROPEEN

(11) **EP 2 733 565 B1**
(45) Date de publication et mention de la délivrance du brevet: **29.03.2017**
(21) Numéro de dépôt: 14155100.2
(22) Date de dépôt: 01.02.2013
(51) Int. Cl.: G05G 5/02, G05G 5/05, B64C 25/18, B64C 25/24, H01H 19/00, B64C 25/16

(54) **BOÎTIER DE COMMANDE**
SCHALTVORRICHTUNG
CONTROL DEVICE

(30) Priorité: 08.02.2012 FR 1251189
(43) Date de publication de la demande: 21.05.2014
(62) Demande divisionnaire de: 13153725.0
(73) Titulaire: Safran Landing Systems, 78140 Vélizy-Villacoublay (FR)
(72) Inventeur: Lecourtier, Gilbert, 78140 Velizy-Villacoublay (FR)
(74) Mandataire: Parzy, Benjamin Alain

(56) Documents cités:
- DE-A1- 2 747 152
- FR-A1- 2 875 475
- US-A- 4 573 649

## Description

L'invention concerne un boîtier de commande, pouvant notamment être utilisé pour la manoeuvre au sol d'une trappe d'un atterrisseur d'aéronef.

### ARRIERE-PLAN DE L'INVENTION

La plupart des aéronefs modernes sont munis d'atterrisseurs escamotables, de soutes destinées à recevoir ces atterrisseurs lorsque l'aéronef est en vol, et de trappes pour fermer ces soutes. L'ouverture et la fermeture des trappes sont effectuées à l'aide d'actionneurs de manoeuvre des trappes, par exemple des vérins.

Lorsque la trappe arrive en position fermée, elle est verrouillée automatiquement dans cette position par des moyens d'accrochage, par exemple un boîtier d'accrochage sur lequel s'articule un crochet qui emprisonne un galet fixé sur la trappe. Le décrochetage du crochet est réalisé à l'aide d'un actionneur, le plus souvent hydromécanique ou électromécanique. Souvent, le boîtier d'accrochage comporte un actionneur de secours à même de déverrouiller le crochet, si l'actionneur principal ne pouvait plus être utilisé.

En vol, le décrochetage de ce crochet et l'ouverture et la fermeture de cette trappe sont commandés lors des séquences d'extension et de rétraction des atterrisseurs. Il est à noter que les trappes sont refermées et crochetées lorsque les atterrisseurs sont déployés.

Lorsque l'aéronef est au sol, il est nécessaire de pouvoir ouvrir les trappes, notamment pour accéder aux équipements situés sur la partie haute de l'atterrisseur ou dans la soute de l'atterrisseur. Dans ce but, la plupart des aéronefs comportent des moyens de commande mécaniques opérables par le personnel au sol, permettant de désactiver les moyens d'accrochage afin de libérer les trappes.

Ces moyens de commande mécaniques comportent en général une poignée reliée aux boîtiers d'accrochage par un embiellage, ainsi que des moyens de sécurité permettant d'éviter une manoeuvre intempestive de la poignée.

Ces moyens de commande mécaniques sont particulièrement lourds, encombrants et donc coûteux pour le fabriquant de l'aéronef.

L'arrière-plan technologique est illustré par le document FR-A1-2 875 475.

### OBJET DE L'INVENTION

L'invention a pour objet un boîtier de commande, pouvant notamment être utilisé pour la manoeuvre au sol d'une trappe d'un atterrisseur d'aéronef, de conception simplifiée.

### BREVE DESCRIPTION DE L'INVENTION

En vue de la réalisation de ce but, on propose un dispositif de manoeuvre au sol d'une trappe d'un atterrisseur d'aéronef comportant:
- des moyens de manoeuvre de la trappe,
- des moyens d'accrochage permettant de bloquer la trappe lorsque celle-ci arrive en position fermée, les moyens d'accrochage comportant au moins un actionneur de déverrouillage agencé pour agir sur les moyens d'accrochage en vue de les désactiver,
- un boîtier de commande pour délivrer sélectivement des ordres à des récepteurs, le boîtier de commande comprenant :
- un arbre monté tournant autour d'un axe de rotation, tout en pouvant coulisser selon ledit axe entre une position de repos vers laquelle il est rappelé par des moyens de rappel et une position active ;
- des moyens de délivrance d'ordres coopérant avec l'arbre pour délivrer des ordres en fonction d'une position angulaire de l'arbre;
- des moyens d'entraînement en rotation de l'arbre ;
- des moyens d'actionnement de sécurité pour faire coulisser l'arbre depuis la position de repos dans laquelle des moyens d'anti-rotation empêchent l'arbre de tourner, jusqu'à la position active dans laquelle les moyens d'anti-rotation laissent libre la rotation de l'arbre entraîné par les moyens d'entraînement en rotation;
   les moyens de délivrance d'ordres du boîtier étant opérationnellement relié aux moyens de manoeuvre de la trappe et à l'actionneur de déverrouillage pour commander sélectivement les séquences suivantes :
- une séquence d'ouverture lors de laquelle l'actionneur de déverrouillage est actionné pour désactiver les moyens d'accrochage,
- une séquence de fermeture lors de laquelle les moyens de manoeuvre sont actionnés pour refermer la trappe.

Ainsi, pour délivrer un ordre, un opérateur doit agir simultanément sur les moyens d'actionnement de sécurité et sur les moyens d'entraînement en rotation, ce qui permet de sécuriser la commande en évitant toute génération d'ordre intempestif par une rotation accidentelle de l'arbre. La sécurité consiste ici à empêcher une telle rotation tant que l'arbre n'a pas été poussé, ce qui est particulièrement simple et donc léger à implémenter.

Ainsi, une manoeuvre de la trappe ne peut être commandée par inadvertance par l'action d'un opérateur au sol ou toute autre cause extérieure.

### BREVE DESCRIPTION DES DESSINS

L'invention sera mieux comprise à la lumière de la description qui suit en référence aux figures des dessins annexés parmi lesquelles :
- la figure 1 est une vue schématique de face d'une soute d'aéronef avec sa trappe et son atterrisseur en position déployée, l'aéronef étant muni d'un boîtier de commande selon l'invention pour commander la manoeuvre de la trappe au sol,
- la figure 2 est une vue en coupe du boîtier de commande de l'invention selon un axe de rotation de la poignée, un arbre du boîtier étant dans une position de repos,

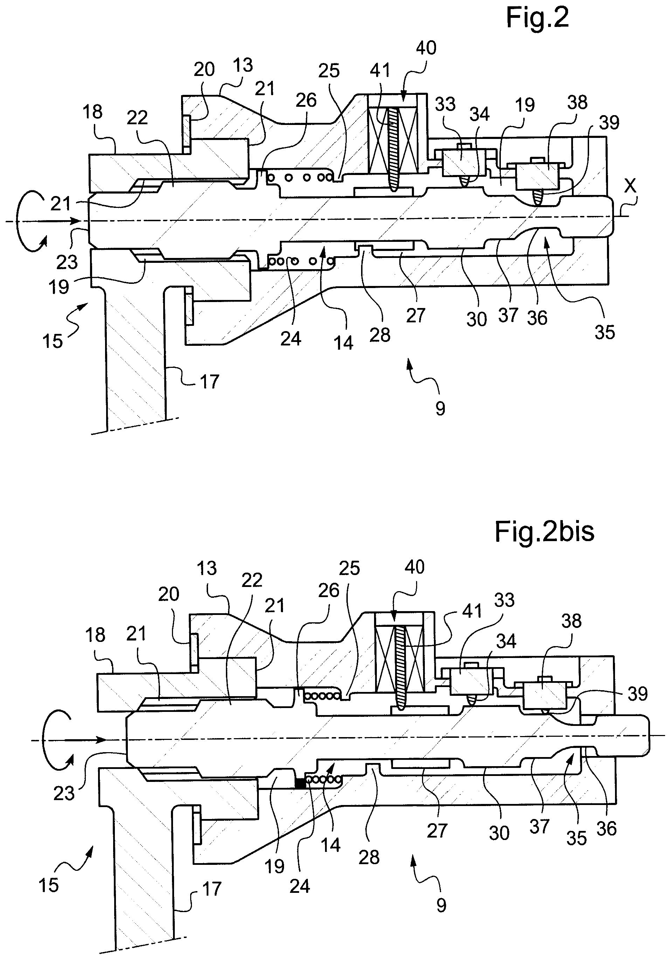

- la figure 2 bis est une vue en coupe similaire à celle de la figure 2, l'arbre du boîtier étant dans une position active,

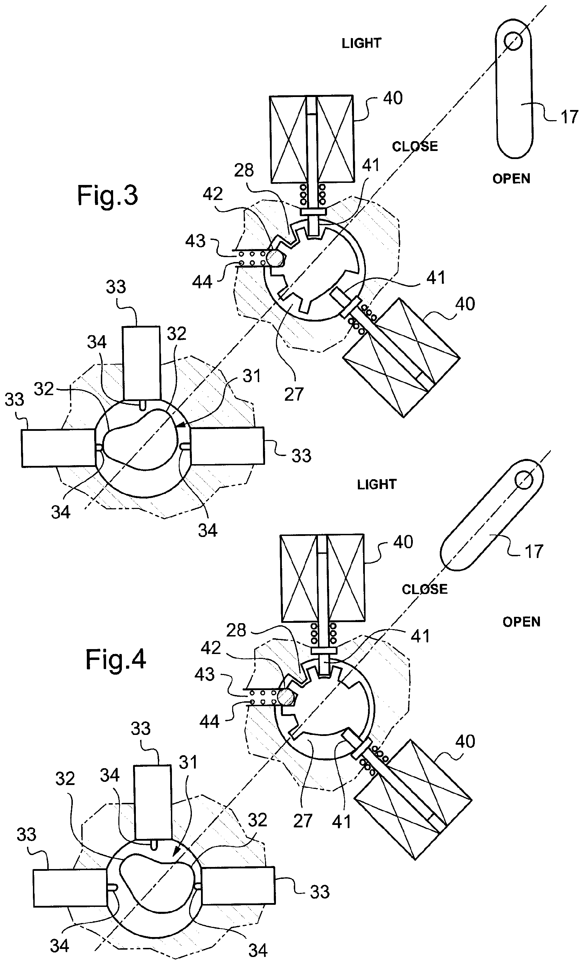

- les figures 3, 4, 5 sont des représentations schématiques montrant une partie de l'arbre du boîtier de l'invention en perspective dans un premier état, un deuxième état, et un troisième état de commande.

### DESCRIPTION DETAILLEE DE L'INVENTION

Le boîtier de l'invention est ici décrit dans une application de manoeuvre au sol de trappes d'atterrisseurs d'aéronef dans laquelle il est particulièrement utile. Cependant, cette application n'est pas limitative.

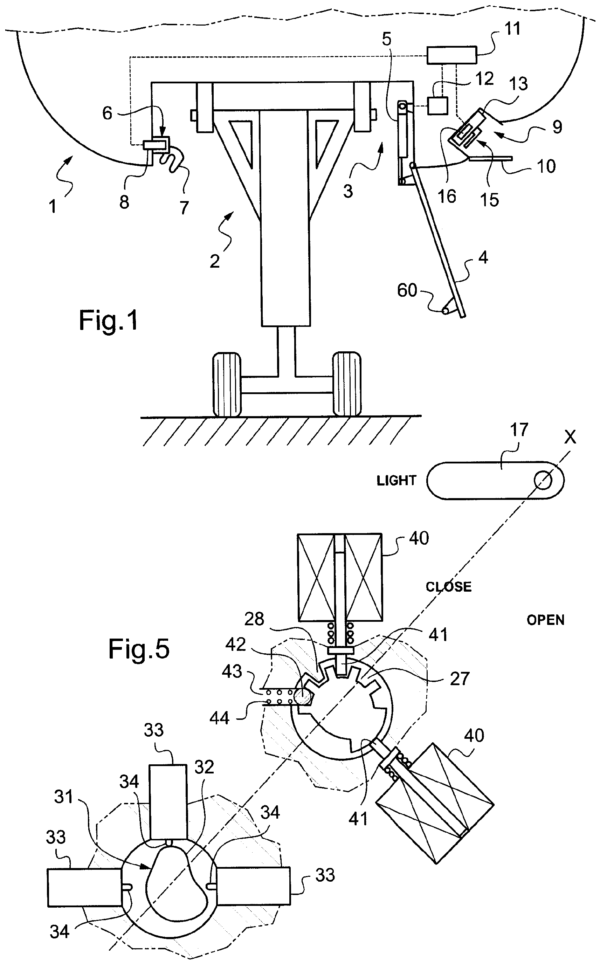

L'aéronef 1 représenté à la figure 1 comporte un atterrisseur 2 articulé sur la structure entre une position déployée illustrée ici et une position rétractée dans laquelle l'atterrisseur est reçu dans une soute 3 refermable par une trappe 4. Un vérin 5 attelé à la trappe 4 permet de manoeuvrer celle-ci. Un boîtier d'accrochage 6 muni d'un crochet 7 permet de crocheter une olive 60 solidaire de la trappe 4 lorsque la trappe 4 arrive en position fermée. Le décrochetage du crochet 7 est commandé par un actionneur électromécanique 8.

Pour commander au sol la manoeuvre de la trappe 4 et le décrochetage du crochet 7, l'aéronef est muni d'un boîtier de commande 9 selon l'invention, accessible par l'ouverture d'une porte 10. Le boîtier de commande 9 est ici relié électriquement à une centrale électrique 11 qui est agencée pour commander une électrovanne 12 électrohydraulique reliée au vérin de trappe 5 et pour commander l'actionneur électromécanique 8 du boîtier d'accrochage 6. Les différentes connexions fonctionnelles entre les équipements cités ci-dessus sont représentées schématiquement à la figure 1 en pointillés.

Le boîtier de commande 9, visible en détail aux figures 2 et 2 bis, comporte :
- un corps 13, fixé à l'aéronef 1,
- un arbre 14, mobile en rotation autour d'un axe X, mais également déplaçable axialement selon le même axe X,
- une poignée 15, destinée à être manoeuvre en rotation autour de l'axe X par un opérateur au sol, et coopérant avec l'arbre 14 pour faire tourner celui-ci,
- une unité de traitement 16 (visible à la figure 1) permettant de fournir la position angulaire de l'arbre 14 à la centrale 11 pour commander une manoeuvre de la trappe 4 selon la position angulaire de l'arbre 14.

La poignée 15 comprend une partie de préhension 17 destinée à être saisie par l'opérateur, s'étendant en saillie d'un moyeu 18 creux s'étendant autour de l'arbre 14. Le moyeu 18 est engagé dans une cavité 19 du corps 13 pour son guidage en rotation selon l'axe X, et maintenu en place par une rondelle d'arrêt 20. Le moyeu 18 et l'arbre 14 comportent des cannelures homologues 21, 22 permettant l'entraînement en rotation de l'arbre 14 par la poignée 15, tout en permettant le déplacement axial de l'arbre 14.

L'arbre 14, de forme générale oblongue, a une extrémité 23 s'étendant au centre du moyeu 18 de la poignée 15 qui est accessible à l'opérateur, de sorte que l'extrémité 23 forme un organe d'actionnement sur lequel l'opérateur peut appuyer pour faire coulisser l'arbre 14 axialement entre une position de repos illustrée à la figure 2, et une position active illustrée à la figure 2 bis. Un ressort 24 s'étend entre un redan 25 du corps et une collerette 26 de l'arbre 14 pour rappeler l'arbre 14 vers la position de repos.

Des rainures 27 de l'arbre 14 coopèrent avec un doigt 28 solidaire du corps 13 de sorte que :
- dans la position de repos, le doigt 28 est engagé dans l'une des rainures 27 pour empêcher l'arbre 14 de tourner,
- dans la position active, le doigt 28 est dégagé des rainures 27 de sorte que l'arbre 14 est libre de tourner sous l'effet d'une manoeuvre de la poignée 15 par l'opérateur.

L'arbre 14 comporte en outre une portion annulaire 30 permettant de transformer la position angulaire de l'arbre 14, commandée par la poignée 15, en ordres vers la centrale 11 pour commander l'électrovanne 12 et l'actionneur électromécanique 8. Comme visible à la figure 3, cette portion annulaire 30 définit une came 31 ayant deux excroissances 32 adaptées à interagir avec trois contacteurs 33 situés dans le corps du boîtier et comportant des doigts 34 qui s'étendent à l'intérieur de la cavité 19 pour être repoussés si une excroissance 32 de la came 31 s'étend en regard du contacteur 33 associé. Les différentes positions angulaires de l'arbre (visibles aux figures 3, 4, 5, ici appelées « OPEN », « FLIGHT » et « CLOSE ») correspondent donc chacune à une combinaison particulière des états des contacteurs, ce qui permet de reconnaître chaque position angulaire. Les contacteurs 33 sont reliés à l'unité 16 pour que celle-ci puisse déterminer, en fonction des indications des contacteurs, la position angulaire de l'arbre 14 et envoyer ladite position à la centrale 11.

Ainsi, pour manoeuvrer la trappe 4, il est nécessaire pour un opérateur d'exercer une double action simultanée consistant appuyer sur l'extrémité 23 de l'arbre 14 et à tourner la poignée 15, ce qui permet d'éviter toute commande intempestive. L'arbre 14 comporte enfin une partie partiellement évidée 35 comprenant un évidement 36 et une partie pleine 37 adaptés à interagir avec un quatrième contacteur 38 dont le doigt 39 est repoussé lorsque la partie pleine 37 s'étend en regard du contacteur 38. Le contacteur 38 détecte ainsi si l'arbre 14 est en position active ou en position de repos. Le contacteur 38 est relié à l'unité de traitement 16 du boîtier de commande 9. La détection d'une position active de l'arbre 14 par le contacteur 38 met sous tension l'unité de traitement 16 et la centrale 11, dont la consommation électrique est donc nulle lorsque la manoeuvre de la trappe 4 n'est pas commandée.

Selon la position angulaire de la poignée 15, la centrale 11 commande :
- une séquence d'ouverture (poignée en position « OPEN ») lors de laquelle l'actionneur électromécanique 8 est actionné pour libérer l'olive 10 de la trappe 4. L'électrovanne 12 est alors activée de sorte que les deux chambres du vérin de trappe 5 soient raccordées, l'effort résultant ouvrant la trappe 4 à la suite de la libération de la trappe 4,
- une séquence de fermeture (poignée 15 en position « CLOSE ») lors de laquelle l'électrovanne 12 est actionnée de sorte que le vérin de trappe 5 referme la trappe 4. Celle-ci est alors automatiquement crochetée lorsque la trappe 4 arrive en position fermée,
- une séquence d'isolation (poignée en position « FLIGHT ») qui provoque l'isolation électrique entre le boîtier de commande 9 et le reste du circuit électrique de l'aéronef, ce qui permet de garantir qu'aucune manoeuvre de la trappe 4 ne sera déclenchée intempestivement.

Pour autoriser un opérateur au sol à commander une séquence, il est nécessaire que certaines conditions prédéterminées soient remplies, parmi lesquelles :
- pour commander une séquence de fermeture lorsque la trappe 4 est ouverte, il est nécessaire que de l'énergie électrique et de l'énergie hydraulique soient disponibles ;
- pour commander une séquence d'ouverture, il est nécessaire que de la puissance électrique soit disponible ;
- il est interdit de commander une séquence d'isolation lorsque la trappe 4 est ouverte.

Le corps 13 du boîtier 9 comporte deux actionneurs électriques 40 linéaires à solénoïde interagissant avec les rainures 27 de l'arbre 14. La partie mobile de chaque actionneur 40 est une tige 41 coulissant selon une direction radiale par rapport à l'arbre 14. Ces actionneurs 40 sont commandés par l'unité de traitement 16 du boîtier 9.

Lorsque les conditions prédéterminées ne sont pas remplies, les tiges 41 des actionneurs 40 sont engagées dans les rainures 27 de l'arbre 14, d'une façon représentée aux figures 3 (position OPEN), 4 (position CLOSE) et 5 (position FLIGHT). Ainsi, pour chaque position « OPEN », « CLOSE », « FLIGHT » de la poignée, l'arbre présente au moins une rainure 27 en regard d'au moins un actionneur 40, pour bloquer la poignée 15 en rotation.

A la différence de la position du doigt fixe 28, la position des tiges 41 des actionneurs 40 est telle qu'elles peuvent être engagées dans les rainures 27 quelle que soit la position longitudinale de l'arbre 14 : si les conditions prédéterminées ne sont pas remplies, la poignée 15 est bloquée même si l'opérateur appuie sur l'extrémité 23 de l'arbre 14.

Une bille d'indexation 42 (visible aux figures 3, 4, 5) est installée pour coulisser dans un logement 43 ménagé dans le corps du boîtier, de sorte que la bille 42 affleure à la surface de la cavité 19 pour coopérer avec la l'arbre 14 au niveau des rainures 27. La bille 42 est rappelée élastiquement par un ressort 44 pour indexer en rotation l'arbre 14, dans le but d'aligner les rainures 27 en face des tiges 41 des actionneurs 40, et de fournir à l'opérateur un retour physique lui indiquant si l'arbre est dans une position prédéfinie OPEN, FLIGHT OU CLOSE, ou bien dans une position intermédiaire.

L'invention n'est pas limitée au mode de réalisation particulier qui vient d'être décrit, mais, bien au contraire, couvre toute variante entrant dans le cadre de l'invention tel que défini par les revendications.

Bien que l'on ait choisi un nombre particulier et une technologie particulière de détecteur de position angulaire à base de contacteurs, ainsi qu'une technologie particulière d'actionneurs, il est possible d'en prévoir un nombre différent, en utilisant des technologies différentes. Par exemple, on pourra utiliser un capteur de position angulaire à effet Hall, l'aimant du capteur s'étendant sur l'arbre de façon à être en interaction électromagnétique avec le détecteur quelque soit la position axiale de l'arbre 14. De même, la forme générale de l'arbre, ainsi que les positions relatives des éléments de la cavité peuvent être différentes, à condition qu'une portion de l'arbre soit adaptée à coopérer avec le détecteur de position angulaire.

On a ici choisi d'intégrer au boîtier une unité de traitement pour communiquer avec une centrale externe, mais il est possible de prévoir d'intégrer l'unité de traitement et la centrale à l'intérieur du boîtier ou dans un équipement externe. Il est aussi possible que l'acquisition de la position de l'arbre et/ou la transmission d'ordres soit réalisée de façon différente, par exemple de façon mécanique.

Bien que l'on ait décrit un boîtier de commande utilisé pour manoeuvrer une trappe d'atterrisseur depuis le sol, il est possible d'utiliser le boîtier de commande dans toute autre application.

Enfin, bien qu'ici, les moyens d'actionnement de sécurité soient directement constitués de l'extrémité de l'arbre sur laquelle on pousse, les moyens d'actionnement de sécurité pourront comprendre un actionneur (mécanique, électromécanique, hydraulique) disposé pour déplacer axialement l'arbre et commandé par l'opérateur.

## Revendications

1. Dispositif de manoeuvre au sol d'une trappe d'un atterrisseur d'aéronef comportant:
- des moyens de manoeuvre (5, 12) de la trappe (4),
- des moyens d'accrochage (6, 7, 10) permettant de bloquer la trappe (4) lorsque celle-ci arrive en position fermée, les moyens d'accrochage (6, 7, 10) comportant au moins un actionneur de déverrouillage (8) agencé pour agir sur les moyens d'accrochage (6, 7, 10) en vue de les désactiver,
- un boîtier de commande (9) pour délivrer sélectivement des ordres à des récepteurs (8, 12), le boîtier de commande comprenant :
- un arbre (14) monté tournant autour d'un axe de rotation (X), tout en pouvant coulisser selon ledit axe (X) entre une position de repos vers laquelle il est rappelé par des moyens de rappel (24) et une position active ;
- des moyens de délivrance d'ordres (16, 11) coopérant avec l'arbre (14) pour délivrer des ordres en fonction d'une position angulaire de l'arbre (14) ;
- des moyens d'entraînement en rotation (15) de l'arbre ;
- des moyens d'actionnement de sécurité (23) pour faire coulisser l'arbre depuis la position de repos dans laquelle des moyens d'anti-rotation (27, 28) empêchent l'arbre de tourner, jusqu'à la position active dans laquelle les moyens d'anti-rotation (27, 28) laissent libre la rotation de l'arbre entraîné par les moyens d'entraînement en rotation (15) ;
les moyens de délivrance d'ordres du boîtier (9) étant opérationnellement relié aux moyens de manoeuvre (5, 12) de la trappe et à l'actionneur de déverrouillage (8) pour commander sélectivement les séquences suivantes :
- une séquence d'ouverture lors de laquelle l'actionneur de déverrouillage (8) est actionné pour désactiver les moyens d'accrochage (6, 7, 10),
- une séquence de fermeture lors de laquelle les moyens de manoeuvre (5, 12) sont actionnés pour refermer la trappe (4).

2. Dispositif de manoeuvre au sol d'une trappe d'un atterrisseur selon la revendication 1, dans lequel l'actionneur de déverrouillage (8) est un actionneur électromécanique.

3. Dispositif de manoeuvre au sol d'une trappe d'un atterrisseur selon l'une des revendications précédentes, dans lequel les moyens d'anti-rotation (27, 28) du boîtier de commande comportent des rainures longitudinales (27) creusées dans une portion de l'arbre (14) qui coopèrent avec un doigt fixe (28) du boîtier de sorte que le doigt (28) soit engagé dans l'une des rainures (27) lorsque l'arbre (14) est en position de repos, et le doigt (28) soit désengagé des rainures (27) lorsque l'arbre (14) est en position active.

4. Dispositif de manoeuvre au sol d'une trappe d'un atterrisseur selon la revendication 3, dans lequel le boîtier de commande comprend en outre au moins un doigt escamotable (41) adapté à pénétrer sélectivement dans l'une des rainures (27) pour bloquer l'arbre (14) en rotation.

5. Dispositif de manoeuvre au sol d'une trappe d'un atterrisseur selon la revendication 4, dans lequel le doigt escamotable (41) est une partie mobile d'un actionneur électromécanique à solénoïde (40).

6. Dispositif de manoeuvre au sol d'une trappe d'un atterrisseur selon la revendication 1, dans lequel le boîtier de commande comprend en outre des moyens de détection (36, 37, 38) adaptés à coopérer avec l'arbre (14) pour détecter si l'arbre (14) est en position de repos ou en position active.

7. Dispositif de manoeuvre au sol d'une trappe d'un atterrisseur selon la revendication 6, dans lequel les moyens de détection (36, 37, 38) commandent une mise sous tension des moyens de délivrance d'ordres (16, 11) lorsque l'arbre (14) est en position active.

8. Dispositif de manoeuvre au sol d'une trappe d'un atterrisseur selon la revendication 1, dans lequel le boîtier de commande comprend en outre des moyens de détection (31, 33) adaptés à coopérer avec l'arbre (14) pour détecter une position angulaire de l'arbre (14).

## Patentansprüche

1. Vorrichtung zum Betätigen einer Klappe eines Flugzeugsfahrwerks am Boden, umfassend:
- Betätigungsmittel (5, 12) zum Betätigen der Klappe (4),
- Befestigungsmittel (6, 7, 10), die ein Verriegeln der Klappe (4) ermöglichen, wenn diese in der geschlossenen Position ankommt, wobei die Befestigungsmittel (6, 7, 10) mindestens einen Entriegelungsaktor (8) umfassen, der so ausgebildet ist, dass er auf die Befestigungsmittel (6, 7, 10) einwirkt, um sie zu deaktivieren,
- einen Steuerkasten (9), um selektiv Befehle an Empfänger (8, 12) auszugeben, wobei der Steuerkasten umfasst:
- eine Welle (14), die drehbar um eine Drehachse (X) gelagert ist, während sie sich entlang der genannten Achse (X) zwischen einer Ruheposition, in die sie durch Rückstellmittel (24) zurückgestellt wird, und einer aktiven Position verschieben kann;
- Befehlsausgabemittel (16, 11), die mit der Welle (14) zusammenwirken, um Befehle in Abhängigkeit von einer Winkelposition der Welle (14) auszugeben;
- Drehantriebsmittel (15) zum Drehantrieb der Welle ;
- Sicherheitsbetätigungsmittel (23), um die Welle von der Ruheposition, in der Antirotationsmittel (27, 28) ein Drehen der Welle verhindern, bis in die aktive Position zu verschieben, in der die Antirotationsmittel (27, 28) die Drehung der von den Drehantriebsmitteln (15) angetriebenen Welle gestatten;
wobei die Befehlsausgabemittel des Kastens (9) betriebsfähig mit den Betätigungsmitteln (5, 12) zum Betätigen der Klappe und mit dem Entriegelungsaktor (8) verbunden sind, um die folgenden Sequenzen selektiv zu steuern:
- eine Öffnungssequenz, während der der Entriegelungsaktor (8) betätigt wird, um die Befestigungsmittel (6, 7, 10) zu deaktivieren,
- eine Schließsequenz, während der die Betätigungsmittel (5, 12) betätigt werden, um die Klappe (4) wieder zu schließen.

2. Vorrichtung zum Betätigen einer Klappe eines Fahrwerks am Boden nach Anspruch 1, bei der der Entriegelungsaktor (8) ein elektromechanischer Aktor ist.

3. Vorrichtung zum Betätigen einer Klappe eines Fahrwerks am Boden nach einem der vorhergehenden Ansprüche, bei der die Antirotationsmittel (27, 28) des Steuerkastens Längsnuten (27) umfassen, die in einem Abschnitt der Welle (14) ausgebohrt sind und mit einem ortsfesten Finger (28) des Kastens zusammenwirken, so dass der Finger (28) in eine der Nuten (27) eingreift, wenn die Welle (14) in Ruheposition ist, und der Finger (28) aus den Nuten (27) ausgerückt wird, wenn die Welle (14) in aktiver Position ist.

4. Vorrichtung zum Betätigen einer Klappe eines Fahrwerks am Boden nach Anspruch 3, bei der der Steuerkasten ferner mindestens einen ausrückbaren Finger (41) umfasst, der dazu geeignet ist, selektiv in eine der Nuten (27) einzudringen, um die Welle (14) in Drehung zu blockieren.

5. Vorrichtung zum Betätigen einer Klappe eines Fahrwerks am Boden nach Anspruch 4, bei der der ausrückbare Finger (41) ein beweglicher Teil eines elektromechanischen Magnetaktors (40) ist.

6. Vorrichtung zum Betätigen einer Klappe eines Fahrwerks am Boden nach Anspruch 1, bei der der Steuerkasten ferner Detektionsmittel (36, 37, 38) umfasst, die dazu geeignet sind, mit der Welle (14) zusammenzuwirken, um zu erfassen, ob die Welle (14) in der Ruheposition oder der aktiven Position ist.

7. Vorrichtung zum Betätigen einer Klappe eines Fahrwerks am Boden nach Anspruch 6, bei der die Detektionsmittel (36, 37, 38) ein Einschalten der Befehlsausgabemittel (16, 11) steuern, wenn die Welle (14) in aktiver Position ist.

8. Vorrichtung zum Betätigen einer Klappe eines Fahrwerks am Boden nach Anspruch 1, bei der der Steuerkasten ferner Detektionsmittel (31, 33) umfasst, die dazu geeignet sind, mit der Welle (14) zusammenzuwirken, um eine Winkelposition der Welle (14) zu erfassen.

## Claims

1. A device for operating an aircraft landing gear hatch on the ground, the device comprising:
- means (5, 12) for operating the hatch (4);
- hooking means (6, 7, 10) enabling the hatch (4) to be locked when it reaches a closed position, the hooking means (6, 7, 10) including at least one unlocking actuator (8) arranged to act on the hooking means (6, 7, 10) in order to deactivate them;
- a control box (9) for selectively delivering orders to receivers (8, 12), the control box comprising:
- a shaft (14) mounted to turn about an axis of rotation (X), while being capable of sliding along said axis (X) between a rest position towards which it is urged by return means (24), and an active position;
- order delivery means (16, 11) co-operating with the shaft (14) to deliver orders as a function of the angular position of the shaft (14);
- rotary drive means (15) for causing the shaft to turn;
- safety actuation means (23) for causing the shaft to slide from the rest position in which anti-rotation means (27, 28) prevent the shaft from turning to the active position in which the anti-rotation means (27, 28) leave the shaft free to turn under drive from the rotary drive means (15) ;
the order delivery means (16) of the control box (9) optionally being connected to the operating means (5, 12) of the hatch and to the unlocking actuator (8) in order to run the following sequences selectively:
- an opening sequence during which the unlocking actuator (8) is actuated to deactivate the hooking means (6, 7, 10); and
- a closing sequence during which the operating means (5, 12) are actuated to reclose the hatch (4).

2. A device for operating an aircraft landing gear hatch on the ground according to claim 1, wherein the unlocking actuator (8) is an electromechanical actuator.

3. A device for operating an aircraft landing gear hatch on the ground according to claim 1, wherein the anti-rotation means (27, 28) comprise longitudinal grooves (27) formed in a portion of the shaft (14) and co-operating with a stationary finger (28) of the control box so that the finger (28) is engaged in one of the grooves (27) when the shaft (14) is in the rest position and the finger (28) is disengaged from the grooves (27) when the shaft (14) is in the active position.

4. A device for operating an aircraft landing gear hatch on the ground according to claim 3, also including at least one retractable finger (41) adapted to penetrate selectively into one of the grooves (27) in order to prevent the shaft (14) from turning.

5. A device for operating an aircraft landing gear hatch on the ground according to claim 4, wherein the retractable finger (41) is a moving portion of an electromechanical solenoid actuator (40).

6. A device for operating an aircraft landing gear hatch on the ground according to claim 1, further including detector means (36, 37, 38) adapted to co-operate with the shaft (14) in order to detect whether the shaft (14) is in the rest position or in the active position.

7. A device for operating an aircraft landing gear hatch on the ground according to claim 6, wherein the detector means (36, 37, 38) cause the order delivery means (16, 11) to be powered when the shaft (14) is in the active position.

8. A device for operating an aircraft landing gear hatch on the ground according to claim 1, further including detector means (31, 33) adapted to co-operate with the shaft (14) in order to detect an angular position of the shaft (14).
